# EUROPEAN PATENT APPLICATION

(11) **EP 2 062 788 A2**
(43) Date of publication of application: **27.05.2009**
(21) Application number: 08169343.4
(22) Date of filing: 18.11.2008
(51) Int. Cl.: B60R 21/015

(54) **Occupant detecting apparatus**

(30) Priority: 20.11.2007 JP 2007300553
(71) Applicant: Aisin Seiki Kabushiki Kaisha, Kariya-shi, Aichi 448-8650 (JP)
(72) Inventor: Takeuchi, Masayoshi c/o Aisin Seiki Kabushiki K., Kariya-shi Aichi 448-8650 (JP); Otake, Wataru c/o Aisin Engineering, Kariya-shi Aichi 448-8605 (JP); Takuma, Setsu c/o Aisin Engineering, Kariya-shi Aichi 448-8605 (JP)
(74) Representative: TBK-Patent

(57) **Abstract**

An occupant detecting apparatus (10, 20, 30) includes a plurality of stress sensitive switches (121 - 126), each of the stress sensitive switches (121-126) having a first electrode (121a - 126a) and a second electrode (121b - 126b), a first electrode power source line (111 - 118, 21, 31), a second electrode power source line (131 - 138, 22, 32), and a break-detecting resistor (14, 24, 34), wherein each of the plurality of stress sensitive switches (121 - 126) is connected to the first electrode power source line (111 - 118, 21, 31) and the second electrode power source line (131 - 138, 22, 32) at the first electrode (121a - 126a) and at the second electrode (121b - 126b) so that each of the plurality of stress sensitive switches is provided in parallel to each other, and the break detecting resistor (14, 24, 34) is connected in series with the first electrode power source line (111 - 118, 21, 31) and in series with the second electrode power source line (131-138, 22, 32) at a position opposite from the first power source terminal (111, 25, 35) and the second power source terminal (131, 23, 35), and the break-detecting resistor (14, 24, 34) is provided at a portion (H) different from the seating surface (S).

## Description

### FIELD OF THE INVENTION

The present invention relates to an occupant detecting apparatus.

### BACKGROUND

A known occupant detecting apparatus is disclosed in JP200664572A (which is hereinbelow referred to as reference 1). According to the occupant detecting apparatus in reference 1, a sensor includes stress sensitive switches and a break-detecting resistor. The break-detecting resistor is connected to the stress sensitive switches in parallel. The break-detecting resistor is provided to be adjacent to the stress sensitive switch that is provided to be the most distant from power source connecting terminals. The break-detecting resistor is provided at an end of a branch portion of the sensor.

Because the occupant detecting apparatus according to reference 1 is provided at a portion where an occupant can be seated, stress is repetitively applied on the break-detecting resistor. The stress may cause the break-detecting resistor and a connecting portion connecting the break-detecting resistor and power source lines to break. Further, the stress may cause a malfunction of the break-detecting resistor, such as fluctuation of a resistance value, or the like.

The break-detecting resistor is provided at the end of the branch portion.
Therefore, a branch wiring for connecting the break-detecting resistor to the power source lines is needed. Accordingly, a circuit of the sensor is complex. Further, because the branch circuit is provided, the sensor is enlarged.

A need thus exits for an occupant detecting apparatus whose durability is improved and whose size is reduced.

### SUMMARY OF THE INVENTION

According to an aspect of the present invention, an occupant detecting apparatus includes a plurality of stress sensitive switches provided at a seating surface of a seat device where an occupant can be seated, each of the stress sensitive switches having a first electrode and a second electrode, a first electrode power source line provided in series and having a first power source terminal connected to a first electrode terminal of an external power source circuit, a second electrode power source line provided in series and having a second power source terminal connected to a second electrode terminal of the external power source circuit and a break-detecting resistor connected to the first electrode power source line and to the second electrode power source line, wherein each of the plurality of stress sensitive switches is connected to the first electrode power source line and the second electrode power source line at the first electrode and at the second electrode so that each of the plurality of stress sensitive switches is provided in parallel to each other, and the break detecting resistor is connected in series with the first electrode power source line and in series with the second electrode power source line at a position opposite from the first power source terminal and the second power source terminal, and the break-detecting resistor is provided at a portion different from the seating surface.

A size of the occupant detecting apparatus is reduced because the occupant detecting apparatus is configured to have the stress sensitive switches that are connected in parallel to the first electrode power source lines whose first power source terminal is connected to the first electrode terminal of the external power source circuit and the stress sensitive switches that are connected in parallel to the second electrode power source lines whose second power source terminal is connected to the second electrode terminal of the external power source circuit. Further, each end of the first and second electrode power source lines, which is opposite from the other end thereof where each of the first and second power source terminals is provided, is connected in series to the break-detecting resistor. Therefore, only one break-detecting resistor is needed and a circuit structure is simplified. Furthermore, the break-detecting resistor is provided at the portion different from the portion where the occupant can be seated. Therefore, stress applied on the break-detecting resistor when the occupant is seated is decreased. As a result, the break-detecting resistor is prevented from malfunctioning and a comfort feeling is improved.

According to another aspect of the present invention, the first electrode power source line and the second electrode power source line are bent and provided at a band-shaped film and the break-detecting resistor is provided at a position adjacent to the first power source terminal and the second power source terminal. According to further aspect of the present invention, the band-shaped film includes a first film, a second film whose second connecting surface is arranged so as to face a first connecting surface of the first film and a spacer holding the first film and the second film to be spaced away by a predetermined distance from each other by connecting the first film and the second film at the first and second connecting surfaces thereof, and the first electrode power source line, the second electrode power source line, the plurality of stress sensitive switches and the break-detecting resistor are provided between the first film and the second film. Accordingly, a plurality of the pressure sensitive switches may be provided at a wide range of the seating surface.

According to another aspect of the present invention, a short-circuit detecting resistor provided at the first electrode power source line or at the second electrode power source line which is provided to be the closest to the first power source terminal or the second power source terminal among the plurality of stress sensitive switches.

Accordingly, a short-circuit, occurring at a connecting portion connecting the first power source terminal of the first electrode power source line and the first electrode terminal and a connecting portion connecting the second power source terminal of the second electrode power source line and the second electrode terminal, is detected by the external power source circuit. Further, a short-circuit occurring at the external power source circuit is detected by the external power source circuit. Furthermore, the external power source circuit is arranged in a circuit easily.

According to another aspect of the present invention, the first electrode is integrally connected to the first electrode power source line, the second electrode is integrally connected to the second electrode power source line, the first electrode power source line, the second electrode power source line, the break-detecting resistor, the first electrode and the second electrode are provided at the first connecting surface of the first film, and a first electrode connecting portion and a second electrode connecting portion are connected to each other and provided at the second connecting surface of the second film at a position facing the first electrode and the second electrode, respectively.

The first electrode and the first electrode power source line are integrally connected. The second electrode and the second electrode power source line are integrally connected. Therefore, the circuit structure is simplified. Further, the first electrode power source line, the second electrode power source line, the break-detecting resistor, the first electrode and the second electrode are provided at the first connecting surface of the first film. The first electrode connecting portion that is connected to the corresponding second electrode connecting portion is provided at the connecting portion of the second film so as to face the corresponding first and second electrodes. Accordingly components are aggregated at the first film. Therefore, the occupant detecting apparatus is easily manufactured and manufacturing cost thereof is decreased.

According to another aspect of the invention, the stress sensitive switches are configured by layering the first film, the spacer, and the second film, the first film at which the first electrode connected to the first electrode power source line and the second electrode connected to the second electrode power source line are provided in parallel to each other, the spacer including a cutaway portion corresponding to the first electrode and the second electrode, the cutaway portion having a hole and an air vent passage for defining an electrode chamber where the first electrodes and the second electrodes are provided, and the second film at which a first electrode connecting portion short circuited by a second electrode connecting portion is provided so as to face the first electrode and the second electrode.

Accordingly, components of the circuit are aggregated at the first film. Therefore, the stress sensitive switch is easily and accurately manufactured and the cost of manufacturing thereof is reduced.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a front view schematically illustrating an occupant detecting apparatus according to a first embodiment;

Fig. 2A is an exploded view schematically illustrating the occupant detecting apparatus according to the first embodiment;

Fig. 2B is an exploded view schematically illustrating the occupant detecting apparatus according to the first embodiment;

Fig. 2C is an exploded view schematically illustrating the occupant detecting apparatus according to the first embodiment;

Fig. 3A is a circuit diagram illustrating the occupant detecting apparatus according to the first embodiment;

Fig. 3B is a circuit diagram illustrating the occupant detecting apparatus according to a modification of the first embodiment;

Fig. 4A is a top view illustrating a state where the occupant detecting apparatus is adapted to a seat cushion the according to the first embodiment;

Fig. 4B is a cross-sectional side view illustrating the state where the occupant detecting apparatus is adapted to the seat cushion according to the first embodiment;

Fig. 5 is a front view schematically illustrating the occupant detecting apparatus according to a second embodiment;

Fig. 6 is a cross-sectional view taken along line VI-VI in Figs. 5 and 7 illustrating the occupant detecting apparatus according to the second embodiment and a third embodiment;

Fig. 7 is a front view schematically illustrating the occupant detecting apparatus according to the third embodiment;

Fig. 8A is a top view illustrating a state where the occupant detecting apparatus is adapted to the seat cushion according to the third embodiment;

Fig. 8B is a cross-sectional side view illustrating the state where the occupant detecting apparatus is adapted to the seat cushion according to the third embodiment

### DETAILED DESCRIPTION

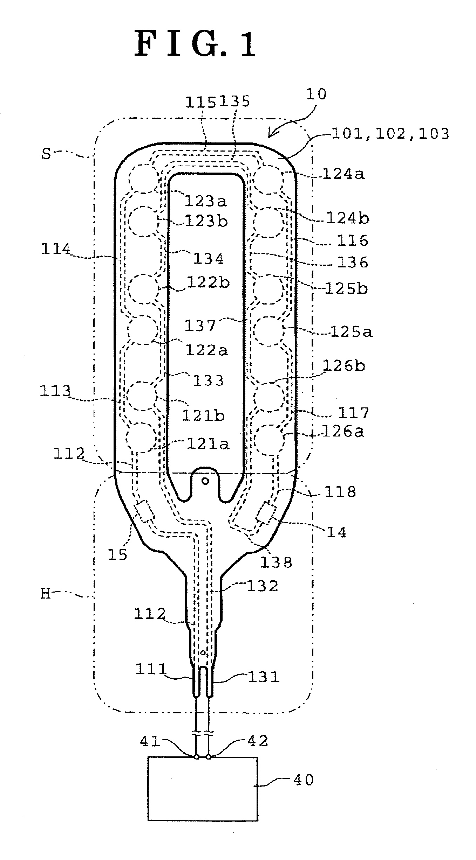

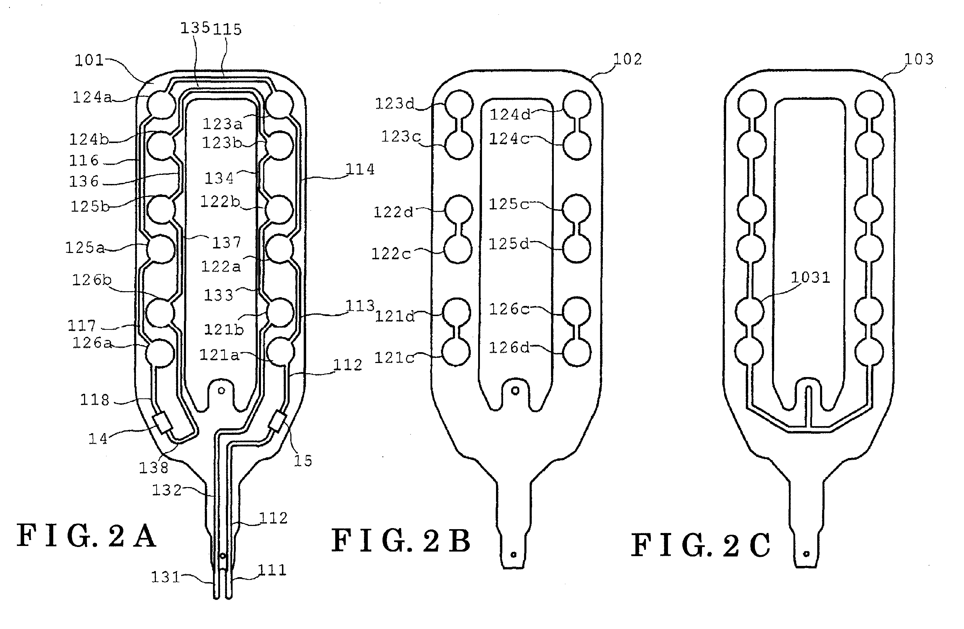

[First embodiment] A first embodiment of an occupant detecting apparatus 10 will be described hereinbelow with reference to the attached drawings. As illustrated in Figs. 1 and 2, the occupant detecting apparatus 10 according to the first embodiment includes ,power source lines 111 - 118 and 131 - 138 (first electrode power source lines 111 - 118 and second electrode power source lines 131 - 138), stress sensitive switches 121 - 126, a break-detecting resistor 14, a short-circuit detecting resistor 15 and band-shaped films 101 - 103 (a first films 101, a second film 102 and a spacer 103). One surface (a front surface in Fig. 2A) of the first film 101 and one surface (a front surface in Fig. 2B) of the second film 102 are formed into first and second connecting surfaces respectively. The first and second connecting surfaces of the first and second films 101 and 102 are provided so as to face each other. The power source lines 111 - 118 and 131 - 138, the stress sensitive switches 121 - 126, the brake detecting resistor 14, and the short-circuit resistor 15 are accommodated in the first and second films 101 and 102. The spacer 103 is provided between the first film 101 and the second film 102. The first film 101 and the spacer 103 are bonded or adhered with each other in order to prevent liquid from entering between the first film 101 and the spacer 103. Likewise, the second film 102 and the spacer 103 are bonded or adhered with each other in order to prevent liquid from entering between the second film 102 and the spacer 103.

The power source lines 111 - 118 and 131 - 138 include the first electrode power source lines 111 - 118 and the second electrode power source lines 131 - 138, all of which are provided at one surface of the first film 101. The first electrode power source lines 111 - 118 are connected to a first electrode terminal 41 of an external power source circuit 40, via a first power source terminal 111. The second electrode power source lines 131 - 138 are connected to a second electrode terminal 42 of the external power source circuit 40 via a second power source terminal 131. The external power source circuit 40, which also functions as a control circuit, detects: whether an occupant is seated; whether disconnection occurs at the occupant detecting apparatus 10 and whether the external power source circuit 40 is short-circuited, based on a magnitude (resistance value) of an electrical current flowing between the first electrode terminal 41 and the second electrode terminal 42. A detailed description of a performance of the external power source circuit 40 will be provided below.

The stress sensitive switches 121 - 126 include first electrodes 121a - 126a, second electrodes 121b - 126b, first electrode connecting portions 121c - 126c and second electrode connecting portions 121d - 126d. The first electrodes 121a - 126a and the second electrodes 12.1b - 126b are provided at one surface of the first film 101. The first electrode connecting portions 121c - 126c and the second electrode connecting portions 121d - 126d are provided at one surface of the second film 102. A cutaway portion 1031 is provided at the spacer 103. The cutaway portion 1031 includes holes and passages for air vents. The holes define electrode chambers where each of the first and second electrodes 121a - 126a and each of the second electrodes 121b - 126b of the stress sensitive switches 121 - 126 are provided. More specifically, the first electrodes 121a - 126a respectively face the first electrode connecting portions 121c - 126c, inside the electrode chambers formed at the spacer 103. Likewise, the second electrodes 121b - 126b respectively face the second electrode connecting portions 121d - 126d, inside the electrode chambers formed at the spacer 103.

Based on a degree of deformation of the first and second films 101 and 102 caused when the stress sensitive switches 121 - 126 are externally stressed, the external power source circuit 40 detects that stress is applied externally. More specifically, when equal to or more than a predetermined stress is applied on the first and second films 101 and 102, the first and second films 101 and 102 are deformed so that the first electrodes 121a - 126a respectively contact with the first electrode connecting portions 121c - 126c and the second electrodes 121b - 126b respectively contact with the second electrode connecting portions 121d - 126d. Consequently, electrical connection between the first electrodes 121a - 126a and the second electrodes 121b - 126b are established. Thus, the external power source circuit 40 detects that equal to or more than the predetermined stress is applied on the first and second films 101 and 102.

The first electrode power source lines 113 - 117 and the first electrodes 121a - 126a are provided in series. The second electrode power source lines 133 - 137 and the second electrodes 121b - 126b are provided in series. The first electrode power source lines 111 - 118 and the second electrode power source lines 131 - 138 connect the stress sensitive switches 121 - 126 in parallel. Further, the first electrode power source lines 111 - 118 are formed in series with the second electrode power source lines 131 - 138 so as not to have a branch portion in a circuit diagram.

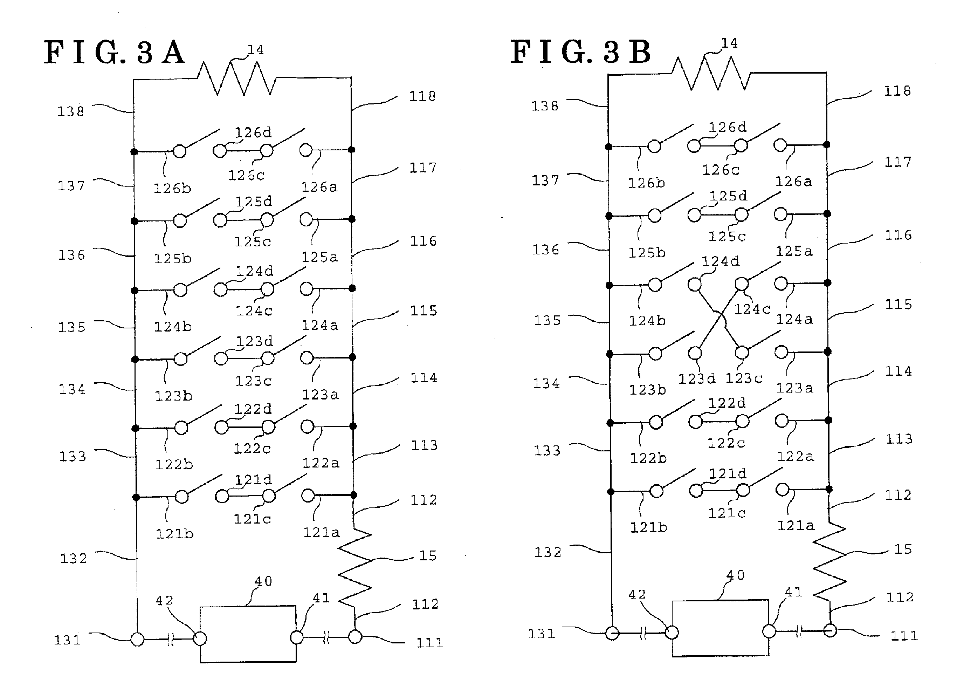

A structure of the occupant detecting apparatus 10 according to the first embodiment is illustrated in the circuit diagram in Fig. 3A. As illustrated in Fig. 3A, the structure of the occupant detecting apparatus 10 is a ladder structure. However, as illustrated in Fig. 3B, the structure may be modified to include a crossed intersection at the stress sensitive switches 121 - 126 (i.e., instead of establishing connections between the first electrode connecting portion 123c and the second electrode connecting portion 123d, and between the first electrode connecting portion 124c and the second electrode connecting portion 124d, connections between the first electrode connecting portion 123c and the second electrode connecting portion 124d, and between the first electrode connecting portion 124c and the second electrode connecting portion 123d may be established). In other words, as long as the first electrode power source lines 111 - 118 and the second electrode power source lines 131 - 138 are structured so as not to have the branch portion in the circuit diagram, a structure for connecting the stress sensitive switches 121 - 126 in parallel may be modified.

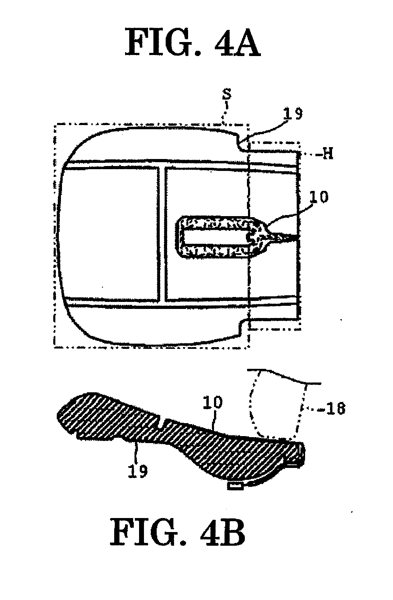

The break-detecting resistor 14 is serially connected to the first and second electrode power source lines 118 and 138, which are provided at ends opposite from the other ends of the power source lines 111 - 118 and 131 - 138 where the first power source terminal 111 and second power source terminal 131 are provided. The break-detecting resistor 14 is provided at a different portion from a seating surface S. In the first embodiment, as illustrated in Fig. 4, the break-detecting resistor 14 is provided at a portion H that is covered by a seatback 18. By bending the power source lines 111 - 118 and 131 - 138, the break-detecting resistor 14 is provided so as to be adjacent to the first and second power source terminals 111 and 131. The break-detecting resistor 14 is provided closer to the first and second power source terminals 111 and 131 compared to any one of the stress sensitive switches 121 - 126 relative to the first and second power source terminal 111 and 131. When an entire structure of the power source lines 111 - 118 and 131 - 138 is viewed, the first electrode power source lines 111 - 118, and the second electrode power source lines 131 - 138 are formed in a U-shape whose bent portion faces a front direction of a seat cushion 19 (which serves as a seat device) ("front" hereinbelow corresponds to a front of the vehicle). A resistance value of the break-detecting resistor 14 for detecting the disconnection is larger than a resistance value of the stress sensitive switches 121 - 126 when the stress sensitive switches 121 - 126 are turned to an ON state. Further, the resistance value of the break-detecting resistor 14 for detecting the disconnection is smaller than a resistance value of the power source lines 111 - 118 and the 131 - 138 when the disconnection occurs at any of the power source lines 111 - 118 and the 131 - 138. Furthermore, the resistance value of the break-detecting resistor 14 for detecting the disconnection may be smaller than a resistance value of the external power source circuit 40 when the disconnection occurs at the external power source circuit 40 that supplies the power source to the occupant detecting apparatus 10. Therefore, when the disconnection does not occur at the power source lines 111 - 118 and 131 - 138, the resistance value resulted from the break-detecting resistor 14 is detected by the external power source circuit 40. On the other hand, when the disconnection occurs at the pair of the power source lines 111 - 118 and 131 - 138, the resistance value of the power source lines 111 - 118 and 131 - 138 significantly becomes large. Therefore, an occurrence of the disconnection is detected by the external power source circuit 40. Further, whether a stress is not applied on the stress sensitive switches 121 - 126, or even though the stress sensitive switches 121 - 126 are in the ON state, the ON state is not detected by the external power source circuit 40 because of the occurrence of the disconnection, is determined by the external power source circuit 40.

The short-circuit detecting resistor 15 is provided at the first electrode power source line 112 that is adjacent to the first power source terminal 111 of the first electrode power source lines 111 - 118. In the same manner as the break-detecting resistor 14, the short-circuit detecting resistor 15 is provided at the portion H that is provided at a different portion from the seating surface S. The resistance value of the break-detecting resistor 14 for detecting the short-circuit is larger than a resistance value of the external power source circuit 40 when a short circuit occurs inside the external power source circuit 40 that supplies the power source to the occupant detecting apparatus 10. Therefore, when a short circuit does not occur inside the external power source circuit 40, even though the stress sensitive switches 121 - 126 are in the ON state, the resistance value resulted from the short-circuit detecting resistor 15 is detected by the external power source circuit 40. On the other hand, when a short-circuit occurs at the external power source circuit 40, the resistance value of the external power source circuit 40 significantly becomes small. Therefore, the external power source circuit 40 detects whether the stress sensitive switches 121 - 126 are in the ON state or a short circuit occurs at the external power source circuit 40.

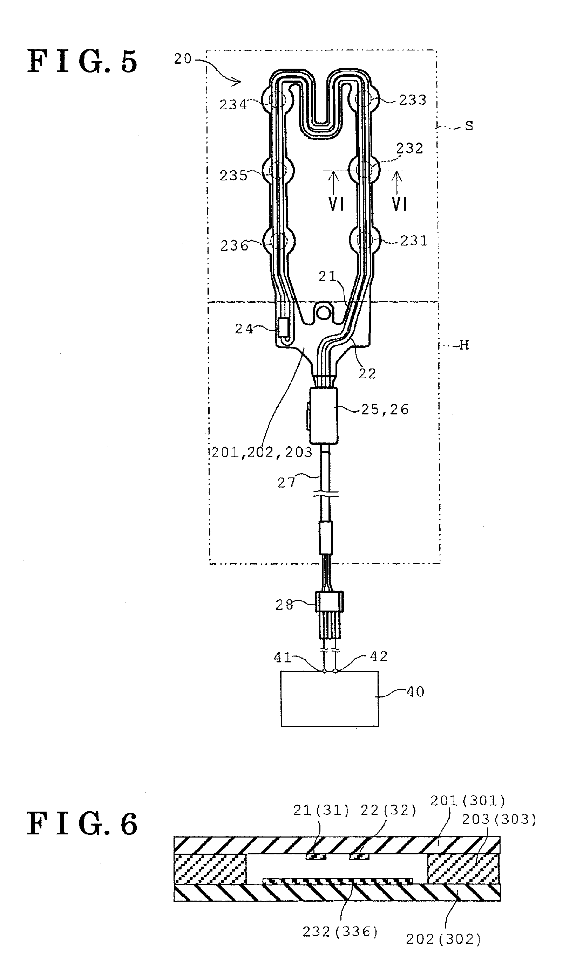

[Second embodiment] A second embodiment of an occupant detecting apparatus 20 will be described hereinbelow. As illustrated in Figs. 5 and 6, the occupant detecting apparatus 20 includes a first power source line 21(which serves as a first electrode power source line), a second power source line 22 (which serves as a second electrode power source line), stress sensitive switches, a break-detecting resistor, band-shaped films 201 - 203 (a first film 201, a second film 202, and a spacer 203) and a power source terminal 25 (which serves either as a first power source terminal or as a second power source terminal). The first and second power source lines 21 and 22 are connected to a first electrode terminal 41 and a second electrode terminal 42 of an external power source circuit 40 via the power source terminal 25. One surface of the first film 201 and one surface of the second film 202 are formed into first and second connecting surfaces. The first and second connecting surfaces of the first and second films 201 and 202 are provided so as to face each other. The spacer 203 is provided between the first film 201 and the second film 202. According to the second embodiment, the occupant detecting apparatus 20 does not include a short-circuit detecting resistor. However, the occupant detecting apparatus 20 may include a short-circuit detecting resistor. The power source terminal 25 is connected to a wiring harness 27 at a first connector 26.
The wiring harness 27 includes the first connector 26 and a second connector 28.

Each of the stress sensitive switches includes a pair of electrodes (which serve as a first electrode and as a second electrode) and first and second electrode connecting portions 231 - 236. A portion of the first power source line 21 and a portion of the second power source line 22 function as the pair of electrodes. In other words, the pair of power source lines 21 and 22 is provided so as to contact each other via the first and second electrodes connecting portions 231 - 236. When stress is applied on the first and second films 201 and 202, the first and second films 201 and 202 are deformed. The first and second films 201 and 202 are deformed so that the first and second electrode connecting portions 231 - 236 contact both of the first and second power source lines 21 and 22. Consequently, electrical connection between the first and second electrode connecting portions 231 - 236 and the first and second power source lines 21 and 22 are established. Thus, the external power source circuit 40 detects that equal to or more than the predetermined stress is applied on the first and second films 201 and 202.

Each end of the pair of the power source lines 21 and 22, which is opposite from the other end thereof where the power source 25 is provided, is connected in series with the break-detecting resistor 24. The break-detecting resistor 24 is provided at a portion H that is provided at a different portion from a seating surface S. By bending the pair of power source lines 21 and 22, the break-detecting resistor 24 is provided so as to be adjacent to the power source terminal 25. The break-detecting resistor 24 is provided closer to the power source terminal 25 compared to any one of the stress sensitive switches relative to the power source terminal 25. When an entire structure of the pair of power source lines 21 and 22 is viewed, in the same manner as the first embodiment, the pair of power source lines 21 and 22 that extends from the power source terminal 25 to the break-detecting resistor 24 is formed in a U-shape whose bent portion faces a front direction of a seat cushion (which serves as a seat device).

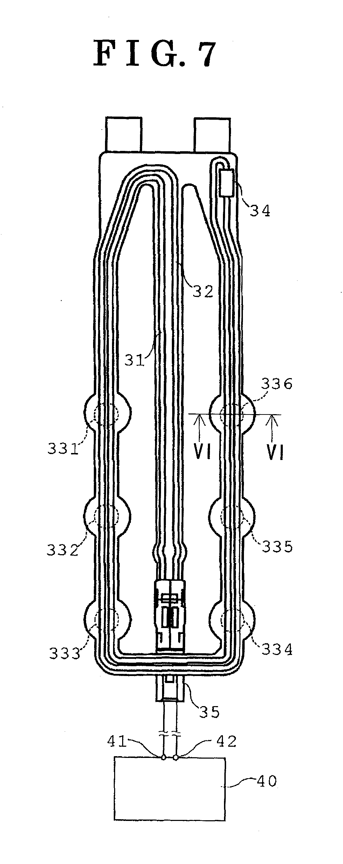

[Third embodiment] As illustrated in Figs. 6 and 7, an occupant detecting apparatus 30 includes a first power source line 31(which serves as a first electrode power source line), a second power source line 32(which serves as a second electrode power source line), stress sensitive switches, a break-detecting resistor 34, band-shaped films 301 - 303 (a first film 301, a second film 302, and a spacer 303) and a power source terminal 35(which serves either as a first power source terminal or as a second power source terminal). The pair of power source lines 31 and 32 is connected to a first electrode terminal 41 and a second electrode terminal 42 of an external power source circuit 40 via the power source terminal 35. One surface of the first film 301 and one surface of the second film 302 are formed into first and second connecting surfaces. The first and second connecting surfaces of the first and second films 301 and 302 are provided so as to face each other. The spacer 303 is provided between the first film 301 and the second film 302. According to the third embodiment, the occupant detecting apparatus 30 does not include a short-circuit detecting resistor. However, the occupant detecting apparatus 30 may include a short-circuit detecting resistor.

Each of the stress sensitive switches includes first and second electrodes and first and second electrode connecting portions 331 - 336. A portion of the first power source line 21 and a portion of the second power source line 22 function as the first and second electrodes, respectively. In other words, when the first power source line 31 contacts the second power source line 32 via the first and second electrode connecting portions 331 - 336, electrical connection is established therebetween. In such a manner the stress sensitive switches are configured. In the same manner as the second embodiment, when stress is applied on the first and second films 301 and 302, the first and second films 301 and 302 are deformed. The first and second films 301 and 302 are deformed so that the first and second electrode connecting portions 331 - 336 contact both of the first and second power source lines 31 and 32. Consequently, electrical connection between the first and second electrode connecting portions 331 - 336 and the first and second power source lines 31 and 32 are established. Thus, the external power source circuit 40 detects that equal to or more than the predetermined stress is applied on the first and second films 301 and 302.

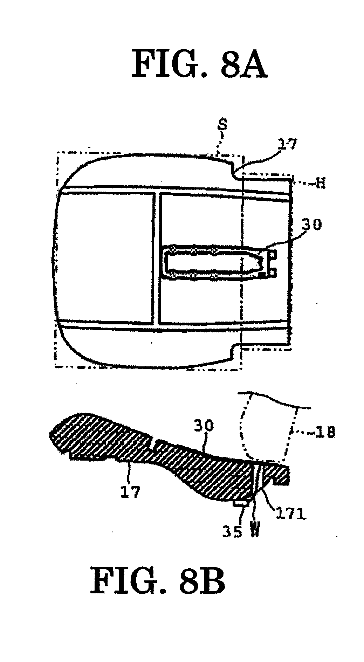

Each end of the pair of the power source lines 31 and 32, which is opposite from the other end thereof provided at the power source 35, is connected in series to the break-detecting resistor 34. The break-detecting resistor 34 is, as illustrated in Fig. 8, provided at a portion H that is provided at a different portion from a seating surface S. The occupant detecting apparatus 30 according to the third embodiment is mounted on a seat cushion 17 (which serves as a seat device) so that a bottom portion ("bottom" herein corresponds to bottom in Fig. 7) of the occupant detecting apparatus 30 faces a front direction of the seat cushion 17. A connecting line portion W is inserted through a through hole 171, which is provided at a lower portion of the seat cushion 17, from an upper surface to a lower surface of the seat cushion 17. The power source terminal 35 is provided at the lower surface of the seat cushion 17. When the pair of power source lines 31 and 32 is mounted to the seat cushion 17, the pair of power source lines 31 and 32 is formed into a U-shape whose bent portion faces the front direction of the seat cushion 17, in the same manner as the first and second embodiments. An occupant detecting apparatus (10, 20, 30) includes a plurality of stress sensitive switches (121 - 126), each of the stress sensitive switches (121-126) having a first electrode (121a - 126a) and a second electrode (121b - 126b), a first electrode power source line (111 - 118, 21, 31), a second electrode power source line (131 - 138, 22, 32), and a break-detecting resistor (14, 24, 34), wherein each of the plurality of stress sensitive switches (121 - 126) is connected to the first electrode power source line (111 - 118, 21, 31) and the second electrode power source line (131 - 138, 22, 32) at the first electrode (121a - 126a) and at the second electrode (121b - 126b) so that each of the plurality of stress sensitive switches is provided in parallel to each other, and the break detecting resistor (14, 24, 34) is connected in series with the first electrode power source line (111 - 118, 21, 31) and in series with the second electrode power source line (131 - 138, 22, 32) at a position opposite from the first power source terminal (111, 25, 35) and the second power source terminal (131, 23, 35), and the break-detecting resistor (14, 24, 34) is provided at a portion (H) different from the seating surface (S).

## Claims

1. An occupant detecting apparatus (10, 20, 30) comprising:
a plurality of stress sensitive switches (121 - 126) provided at a seating surface (S) of a seat device (17, 19) where an occupant can be seated, each of the stress sensitive switches (121-126) having a first electrode (121a - 126a) and a second electrode (121b - 126b);
a first electrode power source line (111 - 118, 21, 31) provided in series and having a first power source terminal (111, 25, 35) connected to a first electrode terminal (41) of an external power source circuit (40);
a second electrode power source line (131 - 138, 22, 32) provided in series and having a second power source terminal (131, 25, 35) connected to a second electrode terminal (42) of the external power source circuit (40); and
a break-detecting resistor (14, 24, 34) connected to the first electrode power source line (111 - 118, 21, 31) and to the second electrode power source line (131 - 138, 22, 32), wherein
each of the plurality of stress sensitive switches (121 - 126) is connected to the first electrode power source line (111 - 118, 21, 31) and the second electrode power source line (131 - 138, 22, 32) at the first electrode (121a - 126a) and at the second electrode (121b - 126b) so that each of the plurality of stress sensitive switches is provided in parallel to each other, and the break detecting resistor (14, 24, 34) is connected in series with the first electrode power source line (111 - 118, 21, 31) and in series with the second electrode power source line (131 - 138, 22, 32) at a position opposite from the first power source terminal (111, 25, 35) and the second power source terminal (131, 23, 35), and the break-detecting resistor (14, 24, 34) is provided at a portion (H) different from the seating surface (S).

2. The occupant detecting apparatus (10, 20, 30) according to claim 1, wherein the first electrode power source line (111 - 118, 21,31) and the second electrode power source line (131 - 138, 22, 32) are bent and provided at a band-shaped film (101, 102, 103, 201, 202, 203, 301, 303, 303) and the break-detecting resistor (14, 24, 34) is provided at a position adjacent to the first power source terminal (111, 25, 35) and the second power source terminal (131, 25, 35).

3. The occupant detecting apparatus (10, 20, 30) according to any one of claims 1 and 2, wherein the band-shaped film (101, 102, 103, 201, 202, 203, 301, 302, 303) includes a first film (101, 201, 301), a second film (102, 202, 302) whose second connecting surface is arranged so as to face a first connecting surface of the first film (101, 201, 301) and a spacer (103, 203, 303) holding the first film (101, 201, 301) and the second film (102, 202, 302) to be spaced away by a predetermined distance from each other by connecting the first film (101, 201, 301) and the second film (102, 202, 302) at the first and second connecting surfaces thereof; and the first electrode power source line (111 - 118, 21, 31), the second electrode power source line (131 - 138, 22, 32), the plurality of stress sensitive switches (121 - 126) and the break-detecting resistor (14, 24, 34) are provided between the first film (101, 201, 301) and the second film (102, 202, 302).

4. The occupant detecting apparatus (10, 20, 30) according to any one of claims 1, 2, and 3, further comprising:
a short-circuit detecting resistor (15) provided at the first electrode power source line (111 - 118, 21, 31) or at the second electrode power source line (131 - 138, 22, 32) which is provided to be the closest to the first power source terminal (111, 25, 35) or the second power source terminal (111, 25, 35) among the plurality of stress sensitive switches (121 - 126).

5. The occupant detecting apparatus (10, 20, 30) according to any one of claims 1, 2 and 3, wherein the first electrode (121a - 126a) is integrally connected to the first electrode power source line (111 - 118, 21, 31), the second electrode (121b - 126b) is integrally connected to the second electrode power source line (131 - 138, 22, 32), the first electrode power source line (111 - 118, 21, 31), the second electrode power source line (131 - 138, 22, 32), the break-detecting resistor (14, 24, 34), the first electrode (121a - 126a) and the second electrode (121b - 126b) are provided at the first connecting surface of the first film (101, 201, 301), and a first electrode connecting portion (121c-161c) and a second electrode connecting portion (121d-126d) are connected to each other and provided at the second connecting surface of the second film (102, 202, 302) at a position facing the first electrode (121a - 126a) and the second electrode (121b - 126b), respectively.

6. The occupant detecting apparatus (10, 20, 30) according to claim 3, wherein the stress sensitive switches (121 - 126) are configured by layering the first film (101, 102, 103), the spacer (103, 203, 303), and the second film (102, 202, 302), the first film (101, 102, 103) at which the first electrode (121a - 126a) connected to the first electrode power source line (111 - 118, 21, 31) and the second electrode (121b - 126b) connected to the second electrode power source line (131 - 138, 22, 32) are provided in parallel to each other, the spacer (103, 203, 303) including a cutaway portion (1031) corresponding to the first electrode (121a - 126a) and the second electrode (121b - 126b), the cutaway portion having a hole and an air vent passage for defining an electrode chamber where the first electrodes (121a - 126a) and the second electrodes (121b - 126b) are provided, and the second film (102, 202, 302) at which a first electrode connecting portion (121c - 126c) short circuited by a second electrode connecting portion (121d-126d) is provided so as to face the first electrode (121a - 126a) and the second electrode (121b - 126b).
